# FASCICULE DE BREVET EUROPEEN

(11) **EP 3 426 515 B1**
(45) Date de publication et mention de la délivrance du brevet: **03.11.2021**
(21) Numéro de dépôt: 17712197.7
(22) Date de dépôt: 27.02.2017
(51) Int. Cl.: B60K 11/08

(54) **DEFLECTEUR D'AIR, SUPPORT DE MODULE DE FACE AVANT, MODULE DE FACE AVANT ET VEHICULE AUTOMOBILE CORRESPONDANTS**
WINDABWEISER, TRÄGER FÜR FRONTENDMODUL, ENTSPRECHENDES FRONTENDMODUL UND KRAFTFAHRZEUG
WIND DEFLECTOR, SUPPORT FOR FRONT-END MODULE, CORRESPONDING FRONT-END MODULE AND MOTOR VEHICLE

(30) Priorité: 10.03.2016 FR 1651988
(43) Date de publication de la demande: 16.01.2019
(73) Titulaire: Valeo Systemes Thermiques, 78320 Le Mesnil Saint Denis (FR)
(72) Inventeur: VACCA, Frédéric, 78910 BEHOUST (FR)
(74) Mandataire: Valeo Systèmes Thermiques
(86) Numéro de dépôt international: PCT/FR2017/050427
(87) Numéro de publication internationale: WO 2017/153661

(56) Documents cités:
- DE-A1- 10 026 047
- DE-A1-102008 013 336
- DE-A1-102014 004 385
- DE-A1-102014 106 264
- FR-A1- 2 511 330
- FR-A1- 3 022 878

## Description

La présente invention est du domaine des véhicules automobiles, en particulier des véhicules automobiles comprenant un module de face avant. La présente invention concerne en particulier un déflecteur d'air pour un module de face avant. L'invention concerne aussi un véhicule automobile, comprenant au moins un tel déflecteur d'air. L'invention concerne également un support pour module de face avant propre à recevoir des équipements et à être fixé sur la structure du véhicule et comprenant notamment un dispositif d'échange thermique. L'invention concerne encore un module de face avant pour véhicule automobile, du type comprenant un tel support.

Un module de face avant est un élément structurel du véhicule destiné à supporter divers équipements du véhicule, tels que projecteurs, clignotants, avertisseur sonore, dispositif d'échange de thermique, groupe moto-ventilateur, etc. Le module de face avant comporte, à cet effet, un support destiné à recevoir les équipements mentionnés ci-dessus. À l'issue de la production d'un module de face avant, celui-ci peut être assemblé sur le véhicule automobile, notamment avec des éléments du châssis du véhicule automobile, tels que les longerons.

Le module de face avant comporte généralement un bouclier pourvu d'au moins une entrée d'air afin de permettre l'écoulement d'un flux d'air vers un dispositif d'échange thermique disposé au sein du module de face avant. Selon une solution connue, le bouclier présente deux entrées d'air, dites voie haute et voie basse, séparées par une poutre parechoc. Derrière cette poutre parechoc est généralement placé le dispositif d'échange thermique du véhicule automobile.

Le dispositif d'échange thermique est par exemple utilisé pour le refroidissement du moteur ou encore pour la climatisation de l'habitacle.

Le dispositif d'échange thermique comporte généralement un échangeur thermique, tel qu'un radiateur de refroidissement du moteur. Un tel radiateur placé en face avant du véhicule peut être atteint par un flux d'air externe, provenant de l'extérieur du véhicule et passant généralement au préalable à travers la calandre du véhicule. Un fluide de refroidissement circule à l'intérieur du radiateur de façon à échanger de la chaleur avec ce flux d'air externe.

En variante, le dispositif d'échange thermique peut comporter encore au moins un autre échangeur thermique comme le condenseur d'une boucle de climatisation du véhicule.

Il est également connu de disposer un panneau de volets, dans le trajet d'air, généralement devant le dispositif d'échange thermique. La ou les entrées d'air comportent donc des volets avantageusement mobiles permettant d'ouvrir ou d'obstruer ces entrées d'air. Les volets sont généralement montés pivotants sur le panneau autour d'axes parallèles de manière à prendre une multiplicité de positions angulaires différentes entre une position d'obturation bloquant le passage de l'air jusqu'à une position d'ouverture où un flux d'air maximum peut circuler. Un dispositif de contrôle permet, en règle générale, de piloter le fonctionnement des volets mobiles pour ajuster le débit d'air traversant les entrées d'airs et arrivant au dispositif d'échange thermique en fonction des besoins, et permet d'optimiser l'aérodynamisme du véhicule automobile lorsque celui-ci est en fonctionnement. Ainsi, il est possible notamment de fermer les volets mobiles pour accélérer la montée en température d'au moins un échangeur thermique du dispositif d'échange thermique, par exemple en phase de chauffage pour qu'elle soit la plus rapide possible en diminuant la consommation du véhicule automobile, ou au contraire les volets peuvent être ouverts de manière à augmenter l'efficacité du refroidissement.

Cependant, les dimensions prédéterminées des entrées d'air représentent une contrainte pour le débit du flux d'air entrant depuis l'extérieur du véhicule automobile et destiné à refroidir, notamment, les échangeurs thermiques disposés au sein du module de face avant, par aspiration d'air. En particulier, lorsque le véhicule fonctionne à l'aide d'une pile à combustible, il est nécessaire de refroidir très rapidement la pile à combustible lorsque le véhicule automobile est en fonctionnement. Les dimensions actuelles des entrées d'air ne permettent pas d'obtenir un débit suffisant du flux d'air entrant pour garantir un refroidissement optimal des échangeurs thermiques, par exemple, dans des conditions spécifiques de fonctionnement du véhicule automobile.

Le document FR3022878 décrit une face avant de véhicule automobile comportant des entrées d'air latérales qui sont munies chacune d'une écope pilotable par une unité de commande d'une position totalement rabattue à une position totalement ouverte.

Un des buts de la présente invention est d'optimiser le refroidissement des échangeurs thermiques.

À cet effet, l'invention a pour objet un module de face avant selon la revendication

Ainsi, en cas de besoin, notamment lorsqu'un refroidissement est nécessaire, la paroi déflectrice est déployée, et on peut de la sorte améliorer le refroidissement des échangeurs thermique de face avant tel qu'un condenseur et/ou un radiateur. Ceci est particulièrement intéressant pour un véhicule fonctionnant à l'aide d'une pile à combustible pour lequel les besoins en refroidissement sont importants.

Lorsque la paroi déflectrice est escamotée, elle ne forme pas un frein aérodynamique.

D'autres aspects optionnelles de l'invention sont divulgués dans les revendications dépendantes 1-10.

L'invention concerne également un véhicule automobile selon la revendication 11.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une vue partielle de face d'un véhicule automobile comprenant un module de face avant pourvu d'un déflecteur d'air selon un premier mode de réalisation et dans une position déployée,
- la figure 2 est une vue partielle et en perspective du véhicule automobile de la figure 1 montrant deux déflecteurs d'air selon le premier mode de réalisation dans la position déployée,
- la figure 3 montre une vue partielle et en coupe verticale du module de face avant comprenant un dispositif d'échange thermique et montrant un déflecteur d'air selon le premier mode de réalisation dans la position déployée,
- la figure 4 montre une vue partielle de face du véhicule automobile de la figure 1 avec le déflecteur d'air selon le premier mode de réalisation dans une position escamotée,
- la figure 5 montre une vue partielle et en coupe verticale du module de face avant comprenant un dispositif d'échange thermique et montrant un déflecteur d'air selon le premier mode de réalisation dans la position escamotée,
- la figure 6 montre, de manière schématique une vue de face d'un véhicule automobile comprenant un module de face avant pourvu de déflecteurs d'air ne faisant pas partie de l'invention revendiquée mais présent pour illustration.
- la figure 7 montre, de manière schématique une vue de dessus du véhicule automobile de la figure 6 avec les déflecteurs d'air ne faisant pas partie de l'invention revendiquée mais présent pour illustration.
- la figure 8 montre, de manière schématique une vue de dessus du véhicule automobile de la figure 6 avec les déflecteurs d'air ne faisant pas partie de l'invention revendiquée mais présent pour illustration.

Sur ces figures, les éléments sensiblement identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

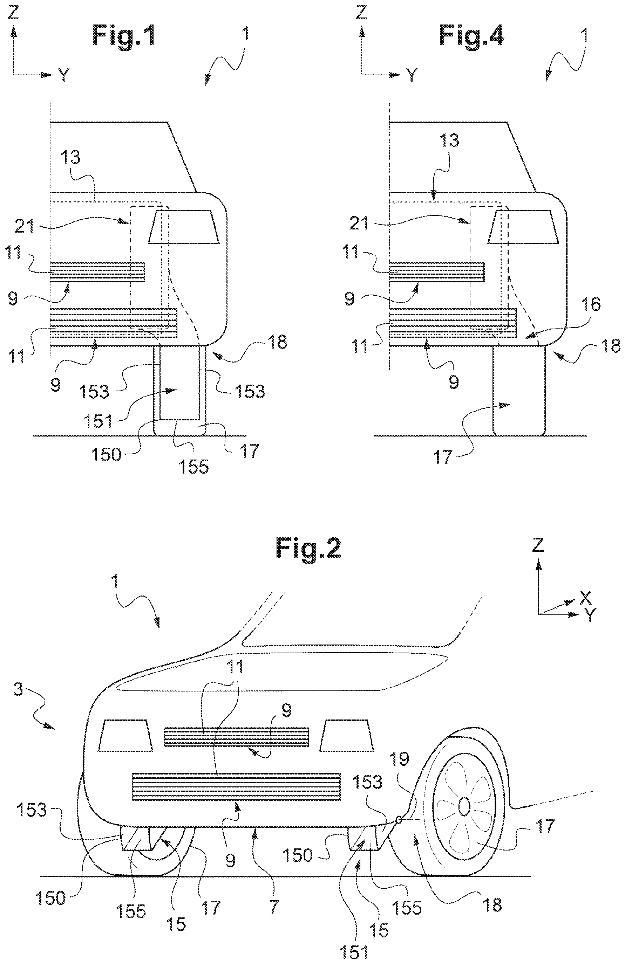

Un véhicule automobile 1 est représenté de façon partielle sur les figures 1 et 2. Le véhicule 1 comporte un module de face avant 3 représenté de façon schématique, situé dans la partie avant du véhicule automobile 1.

Dans la présente description, les termes avant/arrière ou devant/derrière sont désignés en référence au sens de progression en marche avant du véhicule automobile 1 et vertical/horizontal, supérieur/inférieur ou haut/bas sont désignés en référence à la disposition des éléments sur les figures, qui correspond à la disposition des éléments à l'état monté dans le véhicule automobile 1.

Sur les figures, un repère XYZ, XY, YZ ou encore ZX est représenté. L'axe X correspond à l'axe longitudinal du véhicule automobile 1, l'axe Y correspond à l'axe transversal selon la largeur du véhicule automobile 1, et l'axe Z correspond à l'axe vertical selon la hauteur du véhicule automobile 1.

En référence aux figures 1 à 5, on décrit un mode de réalisation de l'invention.

Le module de face avant 3 comporte un support 5 destiné à supporter divers équipements du véhicule automobile 1, plus précisément divers équipements du module de face avant 3. Le véhicule automobile 1 comprend également un bouclier 7 adapté pour être assemblé sur le support de module de face avant 3 du véhicule automobile 1.

Le module de face avant 3 comporte en outre au moins une entrée d'air 9. La ou les entrées d'air 9 sont ménagées à l'avant du véhicule automobile sur le bouclier 7, de manière à permettre l'introduction d'un flux d'air *F* derrière la peau du bouclier 7. La ou les entrées d'air 9 peuvent être agencées de manière sensiblement centrale selon l'axe Y dans le sens de la largeur du véhicule automobile 1.

Dans l'exemple illustré sur les figures, le bouclier 7 comporte deux entrées d'air 9, respectivement dites voie haute et voie basse. Les deux entrées d'air 9 peuvent être séparées par une structure de pare-chocs. Les entrées d'air 9 sont ici agencées l'une en dessous de l'autre selon l'axe vertical Z du véhicule automobile 1.

Le module de face avant 3 peut comporter en outre avantageusement un dispositif d'obturation de l'entrée d'air ou des entrées d'air 9, tel qu'un ou plusieurs panneaux de volets 11, respectivement agencés dans une entrée d'air 9 respective. Au sein du ou de chaque panneau de volets 11, les volets peuvent être superposés et disposés parallèlement les uns avec les autres. Avantageusement, il s'agit de volets mobiles, par exemple capables de pivoter, entre une position d'obturation d'une ou des entrées d'air 9, empêchant ainsi l'air de passer, et plusieurs positions intermédiaires jusqu'à une position d'ouverture optimale, permettant à l'air de passer avec le plus grand débit possible.

Le dispositif d'obturation de l'entrée d'air ou des entrées d'air 9 peut être porté par le support 5 de module de face avant.

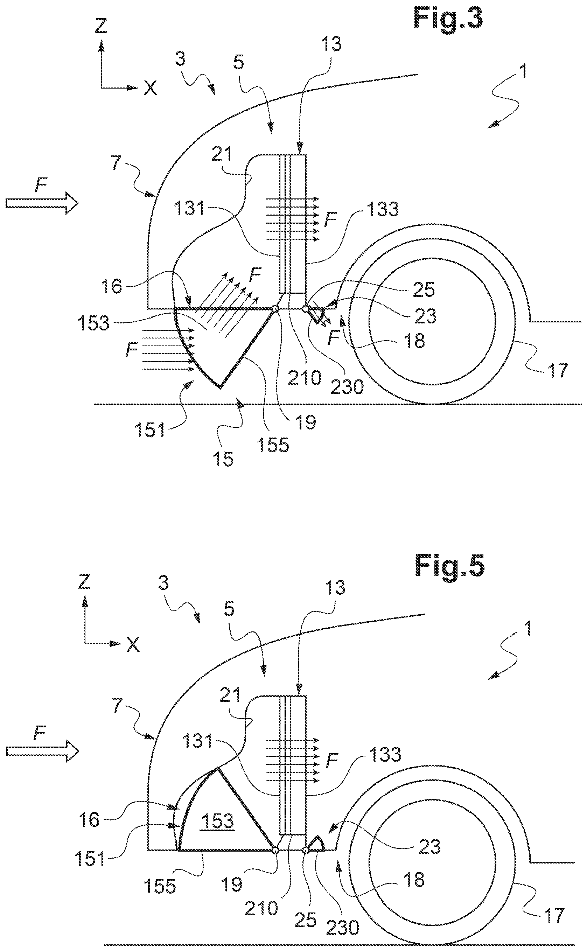

Le module de face avant 3 comporte en outre un dispositif d'échange thermique 13 dont l'emplacement est schématisé par un cadre en pointillés sur la figure 1. Le dispositif d'échange thermique 13 est mieux visible sur les figures 3 et 5.

Ce dispositif d'échange thermique 13 est porté par le support 5 de module de face avant.

Le dispositif d'échange thermique 13 comporte au moins un échangeur thermique 131, 133 tel qu'un condenseur d'une boucle de climatisation 131 et/ou un radiateur de refroidissement 133 du moteur du véhicule.

Le dispositif d'échange thermique 13 est destiné à être monté, dans le véhicule automobile 1, de manière à être traversé par le flux d'air *F* provenant de l'entrée ou des entrées d'air 9 représentées sur la figure 1. À l'état monté dans le véhicule 1, le dispositif d'échange thermique 13 est agencé en aval de l'entrée ou des entrées d'air 9 selon le sens d'écoulement du flux d'air *F* schématisé sur les figures 3 et 5.

Avantageusement, en référence aux figures 1 à 5, le dispositif d'échange thermique 13 est agencé derrière les panneaux de volets 11 selon l'axe horizontal X du véhicule automobile 1 et donc en aval des panneaux de volets 11 selon le sens d'écoulement du flux d'air entrant *F*. Ainsi, lorsque des volets sont mobiles, il est possible de fermer les volets mobiles pour accélérer la montée en température d'au moins un échangeur thermique 131, 133 du dispositif d'échange thermique 13, par exemple en phase de chauffage pour qu'elle soit la plus rapide possible en diminuant la consommation du véhicule automobile 1, ou au contraire les volets peuvent être ouverts de manière à maximiser le flux d'air *F* entrant, et augmenter ainsi l'efficacité du refroidissement.

Le module de face avant 3, et plus précisément le support 5 de module de face avant, comporte en outre au moins un déflecteur d'air 15, également désigné sous le terme de « spoiler » en anglais. Le déflecteur d'air 15 peut former au moins une partie du support 5 de module de face avant ou du bouclier 7, ou encore peut être un élément distinct du bouclier 7 et du support 5 de module de face avant.

Selon les exemples décrits, le module de face avant 3 comporte deux déflecteurs d'air 15.

En outre, le ou chaque déflecteur d'air 15 comporte une paroi déflectrice 150. Le ou chaque déflecteur d'air 15 est destiné à être agencé de façon mobile dans un logement 16 du module de face avant 3. Plus précisément, c'est la paroi déflectrice 150 qui est destinée à être montée mobile. La paroi déflectrice 150 est configurée pour être montée mobile dans le logement 16 entre une position déployée illustrée sur les figures 1 à 3 et une position escamotée illustrée sur les figures 4 et 5.

Selon le mode de réalisation, dans sa position déployée (figures 1 à 3), la paroi déflectrice 150 est baissée, c'est-à-dire qu'elle est orientée vers le bas du véhicule automobile 1 selon l'axe vertical Z, autrement dit vers le sol. Dans sa position escamotée, la paroi déflectrice 150 est relevée et reçue à l'intérieur du logement 16 (figures 4 et 5). Les positions déployée et escamotée sont décrites plus en détail par la suite.

En outre, dans ce mode de réalisation illustré sur les figures 1 à 5, deux déflecteurs d'air 15, par exemple, sont situés dans la partie inférieure du module de face avant 3, plus précisément sur chaque côté latéral du module de face avant 3, en amont des roues avant 17 du véhicule 1 selon le sens d'écoulement du flux d'air *F* à l'état monté du déflecteur d'air 15 sur le véhicule 1. Le flux d'air *F* est destiné à impacter le véhicule 1 et notamment les roues avant 17 selon un sens inverse au sens de progression du véhicule 1 en marche avant.

Dans ce mode de réalisation, le ou chaque déflecteur d'air 15, et donc le logement 16 associé, est agencé à proximité et en amont d'un passage de roue 18, c'est-à-dire une cavité aménagée dans la carrosserie du véhicule 1, et entourant une roue 17. Les déflecteurs d'air 15 peuvent aussi être agencés au niveau des passages de roue 18.

La paroi déflectrice 150 permet dans la position déployée, de dévier le flux d'air *F* se dirigeant vers la roue 17 (figures 1 à 3). En effet, dans cette position abaissée ou déployée, la paroi déflectrice 150 est placée dans le trajet du flux d'air *F* en amont de la roue 17 du véhicule 1. À contrario, dans la position escamotée, la paroi déflectrice 150 est relevée et reçue dans le logement 16, la paroi déflectrice 150 ne fait donc aucun obstacle au flux d'air *F* impactant la roue 17 (figures 4 et 5).

De plus, la paroi déflectrice 150 présente une ouverture 151.

Cette ouverture 151 est telle que dans la position déployée de la paroi déflectrice 150, comme cela est visible sur les figures 1 à 3 pour le premier mode de réalisation, l'ouverture 151 est située hors du logement 16 de façon à être accessible depuis l'extérieur du module de face avant 3. L'ouverture 151 délimite ainsi une entrée d'air additionnelle à l'état monté sur le module de face avant 3 et plus généralement sur le véhicule 1. Le flux d'air *F* impactant le module de face avant 3 peut s'écouler depuis cette entrée d'air additionnelle formée par l'ouverture 151 vers le dispositif d'échange thermique 13 comme schématisé par les flèches sur la figure 3. Autrement dit, dans la position déployée, l'ouverture 151 est disposée dans le trajet du flux d'air *F*, et le flux d'air *F* se dirigeant vers le passage de roue 18 est dévié vers le dispositif d'échange thermique 13.

Selon l'exemple illustré sur les figures 4 et 5, lorsque la paroi déflectrice 150 est dans la position escamotée, l'ouverture 151 est dissimulée à l'intérieur du logement 16. En outre, la paroi déflectrice 150 est configurée de manière à fermer le logement 16 dans cette position escamotée.

On peut prévoir tout moyen d'actionnement approprié pour déplacer la paroi déflectrice 150.

Afin de passer de la position escamotée à la position déployée et inversement, la paroi déflectrice 150 est par exemple montée mobile en pivotement autour d'un axe de pivotement 19. L'axe de pivotement 19 peut être distinct de la paroi déflectrice 150 ou en variante être réalisé d'une seule pièce avec la paroi déflectrice 150. L'axe de pivotement 19 appartient au déflecteur d'air 15.

Selon le mode de réalisation des figures 1 à 5, l'axe de pivotement 19 est sensiblement parallèle à l'axe transversal Y dans le sens de la largeur du véhicule 1. Ainsi, à l'état monté sur le module de face avant 3 ou plus généralement sur le véhicule 1, la paroi déflectrice 150 pivote vers le bas pour passer de la position escamotée (figures 4 et 5) à la position déployée (figures 1 à 3). À l'inverse, la paroi déflectrice 150 pivote vers le haut pour passer de la position déployée (figures 1 à 3) à la position escamotée (figures 4 et 5).

La paroi déflectrice 150 est ici articulée à son extrémité arrière, en référence au sens de marche du véhicule automobile 1 lorsque le déflecteur d'air 15 est monté sur le véhicule automobile 1.

Selon l'exemple particulier illustré, la paroi déflectrice 150 présente une forme générale sensiblement d'écope, c'est-à-dire de pelle creuse présentant des bords surélevés. Cette forme d'écope est mieux visible sur la figure 2 montrant la paroi déflectrice 150 selon le premier mode de réalisation dans la position déployée. La paroi déflectrice 150 comprend deux parties latérales 153 opposées et une partie de fermeture 155 reliant les deux parties latérales 153. Les parties latérales 153 sont par exemple agencées parallèles entre elles. Les parties latérales 153 et la partie de fermeture 155 sont par exemple réalisées d'une seule pièce.

Dans ce mode de réalisation, les parties latérales 153 sont agencées respectivement sur les côtés gauche et droit de la paroi déflectrice 150 et la partie de fermeture 155 forme une partie inférieure de la paroi déflectrice 150 reliant les bords inférieurs des parties latérales 153. Les bords inférieurs des parties latérales 153 correspondent aux bords extérieurs, c'est-à-dire donnant sur l'extérieur du véhicule 1 à l'état monté sur le véhicule 1.

De plus, les parties latérales 153 et la partie de fermeture 155 sont reliées à une extrémité à l'axe de pivotement 19.

Plus précisément selon l'exemple illustré sur les figures 2, 3 et 5, les parties latérales 153 définissent des secteurs de cercle. Les parties latérales 153 sont alors reliées à l'axe de pivotement 19 par leur extrémité opposée à l'arc de cercle.

Par ailleurs, le support 5 de module de face avant comporte un conduit d'air 21, mieux visible sur les figures 3 et 5, raccordé d'une part à l'ouverture 151 du déflecteur d'air 15 et raccordé d'autre part au dispositif d'échange thermique 13. Le conduit d'air 21 permet ainsi de guider le flux d'air en provenance de l'entrée d'air additionnelle définie par l'ouverture 151 du déflecteur d'air 15 lorsqu'il est dans la position déployée, vers le dispositif d'échange thermique 13. Le conduit d'air 21 est également schématisé par des tirets sur les figures 1 et 4.

Le conduit d'air 21 est raccordé au moins à une extrémité du dispositif d'échange thermique 13, tel qu'une extrémité latérale, c'est-à-dire dans le sens de la longueur du dispositif d'échange thermique 13 à l'état monté sur le module de face avant 3. Ainsi, lorsque le déflecteur d'air 15 est déployé, le flux d'air *F* se dirigeant vers le passage de roue 18 et donc la roue 17, est dévié vers une partie latérale du dispositif d'échange thermique 13, ce qui permet d'améliorer le refroidissement du ou des échangeurs thermique 131, 133.

Avantageusement, le support 5 de module de face avant comprend encore au moins une trappe d'évacuation d'air 23 visible sur les figures 3 et 5, qui est destinée à être agencée en aval du dispositif d'échange thermique 13 selon le sens d'écoulement du flux d'air *F*. À l'état monté sur le véhicule 1, la trappe d'évacuation d'air 23 est agencée à proximité et en amont du passage de roue 18 du véhicule 1 selon le sens d'écoulement du flux d'air *F*.

Cette trappe d'évacuation d'air 23 comporte au moins une paroi d'obturation 230 agencée mobile de façon à ouvrir ou fermer la trappe d'évacuation d'air 23. Selon l'exemple illustré, la paroi d'obturation 230 est montée mobile en pivotement sur la trappe d'évacuation d'air 23 autour d'un axe de pivotement 25.

L'ouverture de la trappe d'évacuation d'air 23 permet d'évacuer le flux d'air *F* ayant traversé le dispositif d'échange thermique 13. En effet, le déploiement de la paroi déflectrice 150 augmente le volume d'air traversant le dispositif d'échange thermique 13, et cette trappe d'évacuation d'air 23 permet de gérer l'évacuation du flux d'air *F*, en aval du dispositif d'échange thermique 13.

La paroi d'obturation 230 est configurée pour ouvrir la trappe d'évacuation d'air 23 lorsque le déflecteur d'air 15 est en position déployée (figure 3), et pour fermer la trappe d'évacuation 23 lorsque le déflecteur d'air 15 est en position escamotée (figure 4). Ceci peut se faire de façon automatique.

On peut prévoir tout moyen d'actionnement approprié pour déplacer la paroi d'obturation 230. À titre d'exemple illustratif et non limitatif, une tringlerie avec renvoi d'angle peut être envisagée de façon à permettre l'ouverture de la trappe d'évacuation d'air 23 en même temps que le déploiement de la paroi déflectrice 150, et inversement, par l'action du moyen d'actionnement de la paroi déflectrice 150.

Afin de permettre l'évacuation d'air, la paroi d'obturation 230 présente donc une ouverture par laquelle le flux d'air *F* en sortie du dispositif d'échange thermique 13 est évacué comme cela est schématisé par les flèches sur la figure 3.

La paroi d'obturation 230 peut présenter une forme sensiblement similaire à celle de la paroi déflectrice 150 et ne sera donc pas décrite plus en détail. Comme illustré sur les figures 3 et 5, la paroi d'obturation 230 est par exemple agencée de façon inversée par rapport à la paroi déflectrice 150, de sorte que l'ouverture de la paroi d'obturation 230 est à l'arrière de la paroi d'obturation 230 de façon à être en regard du passage de roue 18 à l'état monté sur le véhicule 1. L'axe de pivotement 25 est dans cet exemple agencé du côté avant de la trappe d'évacuation 23, et peut être par exemple à proximité de l'axe de pivotement 19 du déflecteur d'air 15.

Comme cela est schématisé sur les figures 3 et 5, une paroi 210, par exemple du conduit d'air 21, peut s'étendre de manière à empêcher le passage du flux d'air *F* introduit par l'entrée d'air additionnelle formée par l'ouverture 151 de la paroi déflectrice 150 directement vers la trappe d'évacuation 23 sans traverser le dispositif d'échange thermique 13 au préalable.

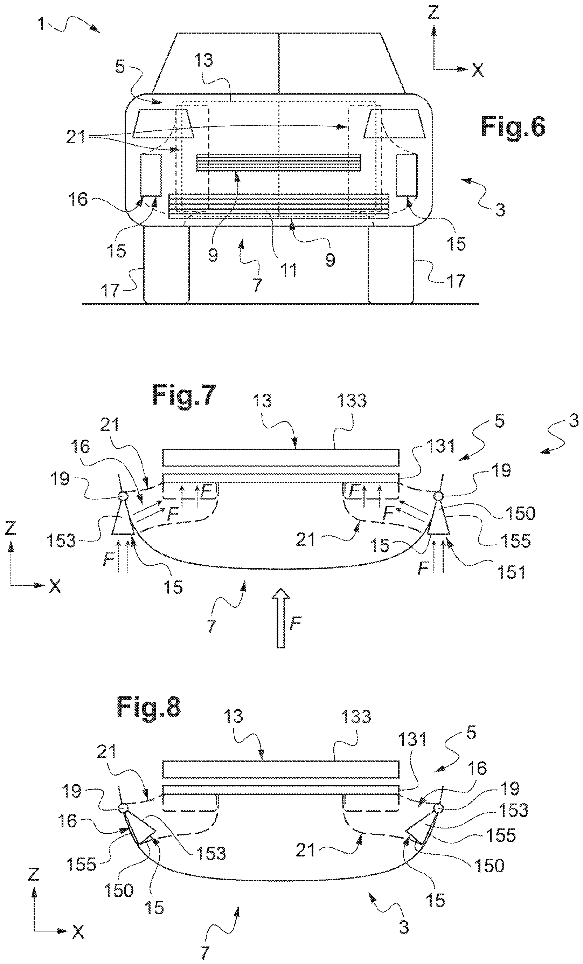

Un exemple ne faisant pas partie de l'invention revendiquée est illustré sur les figures 6 à 8. La description du mode de réalisation en référence aux figures 1 à 5 s'applique aux composants identiques, seules les différences sont maintenant décrites.

De façon similaire au mode de réalisation, dans cet exemple deux déflecteurs d'air 15 sont prévus. Chaque déflecteur d'air 15 peut former ou non au moins une partie du support 5 de module de face avant ou du bouclier 7. En particulier, chaque déflecteur d'air 15 est distinct du bouclier 7 et du support 5 de module de face avant.

L'exemple diffère du mode de réalisation en ce que les déflecteurs d'air 15 ne sont plus disposés en amont des roues avant 17 du véhicule 1.

Les déflecteurs d'air 15 sont selon cet exemple à l'état monté sur le véhicule 1, agencés sur une partie latérale du véhicule 1, de sorte que la paroi déflectrice 150 dépasse latéralement du véhicule 1 dans la position déployée.

Plus précisément dans cet exemple les déflecteurs d'air 15 sont situés sur les côtés latéraux du module de face avant 3 dans la partie supérieure du module de face avant 3.

Par ailleurs, pour une continuité esthétique du bouclier 7, et plus généralement du véhicule automobile 1, la paroi déflectrice 150 est conformée de manière à s'inscrire dans la continuité de la carrosserie du véhicule 1, notamment du bouclier 7, lorsque le déflecteur d'air 15 est dans la position escamotée. Autrement dit, la paroi déflectrice 150 est telle que sa partie de fermeture 155 est affleurante à la carrosserie du véhicule 1, notamment au bouclier 7, dans la position escamotée du déflecteur d'air 15 et à l'état monté sur le véhicule 1.

De façon similaire au mode de réalisation, la paroi déflectrice 150 présente une forme générale sensiblement d'écope, avec deux parties latérales 153 opposées et une partie de fermeture 155 reliant les deux parties latérales 153. Dans cet exemple, les parties latérales 153 forment respectivement des parties supérieure et inférieure de la paroi déflectrice 150, tandis que la partie de fermeture 155 est agencée sur un côté gauche ou droit du déflecteur d'air 15.

Dans cet exemple, la partie de fermeture relie les bords extérieurs des parties latérales, c'est-à-dire les bords orientés vers l'extérieur du véhicule 1 à l'état monté sur le véhicule 1.

Enfin, selon cet exemple, l'axe de pivotement 19 du déflecteur d'air est sensiblement parallèle à l'axe vertical Z s'étendant dans le sens de la hauteur du support 5 de module de face avant à l'état monté sur le véhicule 1. Ainsi, à l'état monté sur le module de face avant 3 ou plus généralement sur le véhicule 1, la paroi déflectrice 150 pivote latéralement vers la gauche ou la droite pour passer de la position escamotée (figure 8) à la position déployée (figure 7) et inversement. En référence aux figures 7 et 8, si l'on considère le déflecteur d'air 15 agencé à gauche du module de face avant 3, la paroi déflectrice 150 de ce déflecteur d'air 15 pivote vers la gauche pour se déployer (figure 7) et vers la droite pour s'escamoter (figure 8). Le fonctionnement est inversé si l'on considère le déflecteur d'air 15 agencé à droite du module de face avant 3.

## Revendications

1. Module de face avant (3) d'un véhicule automobile (1), le module de face avant (3) comportant au moins une entrée d'air (9) et un dispositif d'échange thermique (13), l'entrée d'air (9) étant disposée en amont du dispositif d'échange thermique (13) selon le sens d'écoulement d'un flux d'air (*F*) destiné à impacter le module de face avant (3), comprenant un support de module de face avant (5) comprenant deux déflecteurs d'air (15) chacun comportant une paroi déflectrice (150) montée mobile dans un logement (16) du module de face avant (3) entre :
- une position déployée, dans laquelle, à l'état monté sur ledit véhicule (1), la paroi déflectrice (150) s'étend de manière à dévier le flux d'air (*F*) destiné à impacter le module de face avant (3), et
- une position escamotée, dans laquelle la paroi déflectrice (150) est rangée dans le logement (16),
la paroi déflectrice (150) présentant une ouverture (151) telle que :
- dans la position déployée, l'ouverture (151) est située hors du logement (16) de façon à être disposée dans le trajet du flux d'air (*F*), de manière à délimiter une entrée d'air additionnelle à l'état monté sur ledit véhicule (1) par laquelle le flux d'air (*F*) peut s'écouler vers le dispositif d'échange thermique (13), et que
- dans la position escamotée, l'ouverture (151) est située à l'intérieur du logement (16),
- les deux déflecteurs d'air (15) étant situés dans la partie inférieure du module de face avant (3) sur chaque côté latéral du module de face avant (3), en amont des roues avant (17) du véhicule (1) selon le sens d'écoulement du flux d'air (*F*) à l'état monté du déflecteur d'air (15) sur le véhicule (1),
et dans lequel à l'état monté sur ledit véhicule (1), la paroi déflectrice (150) peut :
- être abaissée et placée en amont de la roue (17) du véhicule (1) selon le sens d'écoulement du flux d'air (*F*) dans la position déployée, et à
- être relevée dans la position escamotée.

2. Module de face avant (3) selon l'une des revendications précédentes, dans lequel la paroi déflectrice (150) présente une forme générale sensiblement d'écope, avec deux parties latérales (153) opposées et une partie de fermeture (155) reliant les deux parties latérales (153).

3. Module de face avant (3) selon l'une des revendication précédentes dans lequel dans lequel la paroi déflectrice (150) est configurée pour être montée mobile en pivotement autour d'un axe de pivotement (19).

4. Module de face avant (3) selon l'une des revendications précédentes, dans lequel le support comporte un conduit d'air (21) 2. pour l'une des ouvertures (151) des déflecteurs d'air (15) et un conduit d'air pour l'autre des ouvertures (151) des déflecteurs d'air (15), chaque conduit d'air (21) étant raccordé d'une part à l'ouverture (151) du déflecteur d'air (15) et d'autre part au dispositif d'échange thermique (13), de manière à guider le flux d'air (F) en provenance de l'entrée d'air additionnelle définie par l'ouverture (151) de la paroi déflectrice (150) dans la position déployée vers le dispositif d'échange thermique (13).

5. Module de face avant (3) selon la revendication précédente, dans lequel le conduit d'air (21) est raccordé au moins à une extrémité du dispositif d'échange thermique (13), tel qu'une extrémité latérale.

6. Module de face avant (3) selon l'une quelconque des revendications précédentes , dans lequel la paroi déflectrice (150) est montée mobile en pivotement sur ledit support (5) autour d'un axe de pivotement (19) sensiblement parallèle à un axe vertical (Z) s'étendant dans le sens de la hauteur dudit support (5) à l'état monté sur ledit véhicule (1).

7. Module de face avant (3) selon l'une quelconque des revendications 1 à 5, dans lequel la paroi déflectrice est montée mobile en pivotement sur ledit support (5) autour d'un axe de pivotement (19) sensiblement parallèle à un axe transversal (Y) dudit véhicule (1) à l'état monté sur ledit véhicule (1).

8. Module de face avant (3) selon l'une quelconque des revendications précédentes, dans lequel le support comporte au moins une trappe d'évacuation d'air (23) agencée en aval du dispositif d'échange thermique (13) selon le sens d'écoulement du flux d'air (*F*), la trappe d'évacuation d'air (23) comprenant au moins une paroi d'obturation (230) agencée mobile de façon à ouvrir ou fermer la trappe d'évacuation d'air (23).

9. Module de face avant (3) selon la revendication précédente, dans lequel la trappe d'évacuation d'air (23) est, à l'état monté dudit support (5) sur ledit véhicule (1), agencée à proximité et en amont d'un passage de roue (18) dudit véhicule (1) selon le sens d'écoulement du flux d'air (*F*).

10. Module de face avant (3) selon l'une des revendications 2. 8 ou 9 , dans lequel la paroi d'obturation (230) est configurée pour ouvrir la trappe d'évacuation d'air (23) lorsque la paroi déflectrice (150) est en position déployée, et pour fermer la trappe d'évacuation d'air (23) lorsque la paroi déflectrice (150) est en position escamotée.

11. Véhicule automobile (1) comportant un module de face avant (3) selon l'une des revendications précédentes. P

## Patentansprüche

1. Frontendmodul (3) für ein Kraftfahrzeug (1), wobei das Frontendmodul (3) zumindest einen Lufteinlass (9) und eine Wärmetauschvorrichtung (13) aufweist, wobei der Lufteinlass (9) in der Strömungsrichtung eines Luftstroms (F), der auf das Frontendmodul (3) auftreffen soll, stromaufwärts der Wärmetauschvorrichtung (13) angeordnet ist, umfassend einen Frontendmodulträger (5), der zwei Luftdeflektoren (15) umfasst, von denen jeder eine Deflektorwand (150) aufweist, die in einer Aufnahme (16) des Frontendmoduls (3) beweglich zwischen:
- einer ausgefahrenen Position, in der sich die Deflektorwand (150) in einem am Fahrzeug (1) montierten Zustand so erstreckt, dass sie den Luftstrom (F), der auf das Frontendmodul (3) treffen soll, ablenkt und
- einer eingefahrenen Position, in der die Deflektorwand (150) in der Aufnahme (16) verstaut ist, montiert ist,
wobei die Deflektorwand (150) eine Öffnung (151) aufweist, so dass:
- sich in der ausgefahrenen Position die Öffnung (151) außerhalb der Aufnahme (16) befindet, sodass sie im Weg des Luftstroms (F) angeordnet ist, um in dem am Fahrzeug (1) montierten Zustand einen zusätzlichen Lufteinlass zu umgrenzen, durch den der Luftstrom (F) zur Wärmetauschvorrichtung (13) strömen kann, und
- in der eingefahrenen Position die Öffnung (151) dazu vorgesehen ist, sich innerhalb der Aufnahme (16) zu befinden,
- wobei sich die beiden Luftdeflektoren (15) im unteren Teil des Frontendmoduls (3) auf jeder Seite des Frontendmoduls (3) in der Strömungsrichtung des Luftstroms (F) stromaufwärts der Vorderräder (17) des Fahrzeugs (1) befinden, wenn die Luftdeflektoren (15) am Fahrzeug (1) montiert sind,
und wobei in dem am Fahrzeug (1) montierten Zustand die Deflektorwand (150)
- abgesenkt und in der ausgefahrenen Position in der Strömungsrichtung des Luftstroms (F) stromaufwärts des Rads (17) des Fahrzeugs (1) angeordnet und
- in die eingefahrene Position angehoben werden kann.

2. Frontendmodul (3) nach einem der vorangehenden Ansprüche, wobei die Deflektorwand (150) eine im Allgemeinen schaufelartige Form mit zwei gegenüberliegenden Seitenteilen (153) und einem die beiden Seitenteile (153) verbindenden Verschlussteil (155) aufweist.

3. Frontendmodul (3) nach einem der vorangehenden Ansprüche, wobei die Deflektorwand (150) so konfiguriert ist, dass sie um eine Schwenkachse (19) schwenkbar montierbar ist.

4. Frontendmodul (3) nach einem der vorangehenden Ansprüche, wobei der Träger einen Luftkanal (21) für die eine der Öffnungen (151) der Luftdeflektoren (15) und einen Luftkanal für die andere der Öffnungen (151) der Luftdeflektoren (15) aufweist, wobei jeder Luftkanal (21) einerseits mit der Öffnung (151) des Luftdeflektors (15) und andererseits mit der Wärmetauschvorrichtung (13) verbunden ist, um den Luftstrom (F), der von dem zusätzlichen Lufteinlass kommt, der durch die Öffnung (151) der Deflektorwand (150) in der ausgefahrenen Position definiert ist, zur Wärmetauschvorrichtung (13) zu leiten.

5. Frontendmodul (3) nach dem vorangehenden Anspruch, wobei der Luftkanal (21) zumindest mit einem Ende der Wärmetauschvorrichtung (13), etwa einem Seitenende, verbunden ist.

6. Frontendmodul (3) nach einem der vorangehenden Ansprüche, wobei die Deflektorwand (150) am Träger (5) um eine Schwenkachse (19) schwenkbar montiert ist, die im Wesentlichen parallel zu einer vertikalen Achse (Z) verläuft, die sich in der Höhenrichtung des Trägers (5) in dem am Fahrzeug (1) montierten Zustand erstreckt.

7. Frontendmodul (3) nach einem der Ansprüche 1 bis 5, wobei die Deflektorwand am Träger (5) um eine Schwenkachse (19) schwenkbar montiert ist, die im Wesentlichen parallel zu einer Querachse (Y) des Fahrzeugs (1) in dem am Fahrzeug (1) montierten Zustand verläuft.

8. Frontendmodul (3) nach einem der vorangehenden Ansprüche, wobei der Träger zumindest eine Luftauslassklappe (23) aufweist, die stromaufwärts der Wärmetauschvorrichtung (13) in der Strömungsrichtung des Luftstroms (F) angeordnet ist, wobei die Luftauslassklappe (23) zumindest eine Verschlusswand (230) umfasst, die beweglich angeordnet ist, um die Luftauslassklappe (23) zu öffnen oder zu schließen.

9. Frontendmodul (3) nach dem vorangehenden Anspruch, wobei die Luftauslassklappe (23), wenn der Träger (5) am Fahrzeug (1) montiert ist, in der Nähe und in Strömungsrichtung des Luftstroms (F) stromaufwärts eines Radkastens (18) des Fahrzeugs (1) angeordnet ist.

10. Frontendmodul (3) nach einem der Ansprüche 8 oder 9, wobei die Verschlusswand (230) so konfiguriert ist, dass sie die Luftauslassklappe (23) öffnet, wenn sich die Deflektorwand (150) in der ausgefahrenen Position befindet, und die Luftauslassklappe (23) schließt, wenn sich die Deflektorwand (150) in der eingefahrenen Position befindet.

11. Kraftfahrzeug (1) mit einem Frontendmodul (3) nach einem der vorangehenden Ansprüche.

## Claims

1. Front-end module (3) of a motor vehicle (1), the front-end module (3) having at least one air intake (9) and a heat-exchange device (13), the air intake (9) being disposed upstream of the heat-exchange device (13) in the direction of flow of an air flow (F) that is intended to strike the front-end module (3), comprising a front-end module support (5) comprising two wind deflectors (15), each having a deflecting wall (150) mounted in a housing (16) of the front-end module (3) so as to be movable between:
- a deployed position in which, when mounted on said vehicle (1), the deflecting wall (150) extends so as to divert the air flow (F) intended to strike the front-end module (3), and
- a retracted position in which the deflecting wall (150) is stowed in the housing (16),
the deflecting wall (150) having an opening (151) such that:
- in the deployed position, the opening (151) is situated outside the housing (16) so as to be disposed in the path of the air flow (F), so as to delimit, when mounted on said vehicle (1), an additional air intake through which the air flow (F) can flow towards the heat-exchange device (13), and such that
- in the retracted position, the opening (151) is situated inside the housing (16),
- the two wind deflectors (15) being situated in the lower part of the front-end module (3) on each lateral side of the front-end module (3), upstream of the front wheels (17) of the vehicle (1) in the direction of flow of the air flow (F) when the wind deflector (15) is mounted on the vehicle (1), and
wherein, when mounted on said vehicle (1), the deflecting wall (150) can:
- be lowered and positioned upstream of the wheel (17) of the vehicle (1) in the direction of flow of the air flow (F) in the deployed position, and can
- be raised into the retracted position.

2. Front-end module (3) according to one of the preceding claims, wherein the deflecting wall (150) has a substantially scoop-shaped overall shape, with two opposing lateral portions (153) and a closing portion (155) connecting the two lateral portions (153) .

3. Front-end module (3) according to one of the preceding claims, wherein the deflecting wall (150) is configured to be mounted so as to be pivotable about a pivot axis (19).

4. Front-end module (3) according to one of the preceding claims, wherein the support has an air duct (21) for one of the openings (151) in the wind deflectors (15) and an air duct for the other of the openings (151) in the wind deflectors (15), each air duct (21) being connected on one side to the opening (151) in the wind deflector (15) and on the other side to the heat-exchange device (13), so as to guide the air flow (F) coming from the additional air intake defined by the opening (151) in the deflecting wall (150) in the deployed position towards the heat-exchange device (13).

5. Front-end module (3) according to the preceding claim, wherein the air duct (21) is connected at least to one end of the heat-exchange device (13), such as a lateral end.

6. Front-end module (3) according to any one of the preceding claims, wherein the deflecting wall (150) is mounted on said support (5) so as to be pivotable about a pivot axis (19) substantially parallel to a vertical axis (Z) extending in the height direction of said support (5) when mounted on said vehicle (1) .

7. Front-end module (3) according to any one of Claims 1 to 5, wherein the deflecting wall is mounted on said support (5) so as to be pivotable about a pivot axis (19) substantially parallel to a transverse axis (Y) of said vehicle (1) when mounted on said vehicle (1).

8. Front-end module (3) according to any one of the preceding claims, wherein the support has at least one air evacuation hatch (23) arranged downstream of the heat-exchange device (13) in the direction of flow of the air flow (F), the air evacuation hatch (23) comprising at least one closing wall (230) arranged in a movable manner so as to open or close the air evacuation hatch (23).

9. Front-end module (3) according to the preceding claim, wherein, when said support (5) is mounted on said vehicle (1), the air evacuation hatch (23) is arranged in the vicinity and upstream of a wheel arch (18) of said vehicle (1) in the direction of flow of an air flow (F).

10. Front-end module (3) according to either of Claims 8 and 9, wherein the closing wall (230) is configured to open the air evacuation hatch (23) when the deflecting wall (150) is in the deployed position, and to close the air evacuation hatch (23) when the deflecting wall (150) is in the retracted position.

11. Motor vehicle (1) having a front-end module (3) according to one of the preceding claims.
